# EUROPÄISCHE PATENTSCHRIFT

(11) **EP 0 598 892 B1**
(45) Veröffentlichungstag und Bekanntmachung des Hinweises auf die Patenterteilung: **18.03.1998**
(21) Anmeldenummer: 93914678.3
(22) Anmeldetag: 18.06.1993
(51) Int. Cl.: B67C 3/26

(54) **VORRICHTUNG ZUR EINSTELLUNG DER FÜLLHÖHE IN FÜLLMASCHINEN FÜR GEFÄSSE**
DEVICE FOR SETTING THE FILLING LEVEL IN VESSEL FILLING MACHINES
DISPOSITIF POUR LE REGLAGE DE LA HAUTEUR DE REMPLISSAGE DANS DES REMPLISSEUSES DE RECIPIENTS

(30) Priorität: 19.06.1992 DE 4220100; 03.11.1992 DE 4237044; 19.03.1993 DE 4308787
(43) Veröffentlichungstag der Anmeldung: 01.06.1994
(73) Patentinhaber: KRONES AG HERMANN KRONSEDER MASCHINENFABRIK, D-93073 Neutraubling (DE)
(72) Erfinder: HÄRING, Franz, D-8402 Neutraubling (DE)
(74) Vertreter: Grünecker, Kinkeldey, Stockmair & Schwanhäusser Anwaltssozietät
(86) Internationale Anmeldenummer: EP9301568
(87) Internationale Veröffentlichungsnummer: WO9400377

(56) Entgegenhaltungen:
- EP-A- 0 237 823
- DE-A- 3 218 062
- DE-A- 3 245 731

## Beschreibung

Die Erfindung betrifft eine Vorrichtung gemäß dem Oberbegriff des Anspruchs 1.

Beim Abfüllen von Flüssigkeiten in Gefäße wie z.B. Flaschen bedarf es einer gezielten Kontrolle des Füllvorgangs, insbesondere dessen Beendigung, um ein Überlaufen oder undefinierte bzw. ungleichmäßige Füllhöhen zu vermeiden. Zu diesem Zweck ist bereits die Verwendung von Sonden bekannt.

Bei den Verfahren und Vorrichtungen nach der Offenlegungsschrift DE 32 45 731 und der Patentschrift US 39 18 475 dienen die in verschiedenen Höhen angeordneten Meßstellen als elektrische Kontakte, die bei Erreichen der jeweiligen Füllhöhe die Füllgeschwindigkeit drosseln und schließlich den Flüssigkeitszulauf stoppen. Zusätzlich ist beim Verfahren nach der Patentschrift DE 32 18 062 die Möglichkeit gegeben, die Zeit zwischen dem Ansprechen zweier verschiedener Meßstellen zu erfassen und mit dem so gewonnenen Wert korrigierend in den aktuellen oder in nachfolgende Füllvorgänge einzugreifen.

Diese bekannten Verfahren arbeiten mit einem rein punktuellen Registrieren des Füllstandes an bestimmten Meß- oder Kontaktstellen. Darin besteht ein wesentlicher Nachteil, da während des Füllvorgangs eine Reihe von Störfaktoren auf diesen einwirken können, wie etwa Temperatur- und Druckschwankungen, unterschiedlicher Gasgehalt der Flüssigkeit, unterschiedliche Gefäßvolum in a usw.. Weiter sind bei den bekannten Sonden die einzelnen Kontaktstellen voneinander vollkommen isoliert an verschiedenen Stellen eines Sondenstabes oder eines Gas- bzw. Füllrohres angebracht und müssen daher durch eine Vielzahl von Leitungen einzeln mit der Auswertungselektronik verbunden werden. Dies bedingt einen hohen Fertigungsaufwand und erhöht die Störanfälligkeit. Eine lückenlose Überwachung des momentanen Füllstandes ist mit den bekannten Sonden nicht möglich.

Hiervon ausgehend liegt der Erfindung die Aufgabe zugrunde, eine raumsparende und betriebssichere Sonde zu schaffen, die insbesondere hinsichtlich der Genauigkeit und Störanfälligkeit verbessert ist.

Diese Aufgabe wird durch die Merkmale des Anspruchs 1 gelöst.

Mit der erfindungsgemäßen Vorrichtung kann je nach Anzahl der Meßstellen und/oder Ausbildung einer Meßstelle ein mehr oder weniger stetiger Signalverlauf realisiert werden, so daß sich eine von der Zeit abhängige Signalfunktion ergibt, aus deren Absolutwert die momentane Füllhöhe und aus deren Steigung die jeweilige Füllgeschwindigkeit abgeleitet werden kann. Der Signalverlauf kann auch als Stufenfunktion betrachtet werden, wobei das Erreichen einer ersten Stufe einer ersten Füllhöhe und das Erreichen einer zweiten Stufe einer zweiten Füllhöhe entspricht. Aus der Zeit zwischen diesen beiden Ereignissen im Meßsignal wird die Füllgeschwindigkeit ermittelt. Das Meßsignal kann beispielsweise einen Spannungsabfall an elektrischen Schaltelementen oder einen Kapazitätswert darstellen.

Mit der erfindungsgemäßen Vorrichtung ist auf einfache Weise eine exakte, direkte Einstellung der Füllhöhe durch sofortige Beendigung der Flüssigkeitszufuhr bei Erreichen eines vorgewählten Füllstandes möglich, da jederzeit eine Aussage über den momentanen Füllstand vorliegt. Durch Veränderung des vorgewählten Füllstandes z.B. mittels eines Schwellwertes in der Auswertungselektronik ist jederzeit eine Veränderung der Füllhöhe möglich, sei es zur Umstellung auf eine andere Gefäßsorte oder zur Berücksichtigung von Schwankungen in bestimmten Flüssigkeitseigenschaften usw.. Aus den ermittelten Füllgeschwindigkeiten können zudem Korrekturgrößen wie Nachfüllzeit oder Nachfüllgeschwindigkeit sowie Schwellwerte für den aktuellen und die nachfolgenden Füllvorgänge gewonnen werden.

Eine erfindungsgemäße Sonde kann z.B. eine Vielzahl von getrennten Kontaktstellen für die Flüssigkeit aufweisen, die über mehrere ohmsche Widerstände, Kondensatoren, antiparallel geschaltete Dioden oder Kombinationen davon mit der Auswertungselektronik verbunden sind. Die Bauelemente können in der Sonde in der Nähe der Meßstellen angeordnet sein oder selbst die Meßstellen bilden, so daß für die Weiterleitung des Meßsignals zur Auswertungselektronik wenige oder gar nur eine Leitung erforderlich ist. Auch ist es möglich, eine unendliche Anzahl von Meßstellen ohne Trennung zu einem einzigen, länglichen Kontaktfeld zusammenzufassen oder mehrere Kontaktstellen an einen einzigen, länglichen Widerstand, Kondensator oder dgl. anzuschließen.

Die Sonden weisen entweder einen eigenen, z.B.stabförmigen Sondenkörper auf, an dem die Meßstellen und die diese verbindenden Schaltelemente angeordnet sind, oder diese sind an den Füll- oder Gasrohren von Füllorganen befestigt. Die Massekontakte können gleichfalls direkt am Sondenkörper untergebracht sein oder durch die Füll- bzw. Gasrohre oder auch durch die Flüssigkeit gebildet sein. Entsprechende Weiterbildungen der Erfindung sind in den Ansprüchen 2 bis 17 angegeben. In jedem Fall ergibt sich eine äußerst platzsparende Anordnung mit nur wenigen Leitungen, so daß eine betriebssichere Arbeitsweise und ein einfacher Einbau in Füllorgane von Füllmaschinen möglich ist.

Im Nachstehenden werden mehrere Ausführungsbeispiele der Erfindung anhand der Zeichnungen beschrieben. Es zeigen:
- Fig. 1: einen teilweisen Schnitt durch ein Füllorgan mit integrierter Sonde,
- Fig. 2: einen vergrößerten Längsschnitt durch eine erste Ausführung der Sonde,
- Fig. 3: einen vergrößerten Längsschnitt durch eine zweite Ausführung der Sonde,
- Fig. 4: ein Ersatzschaltbild der ersten Ausführung der Sonde,
- Fig. 5: eine charakteristische Sondensignal-Zeitkurve der ersten Ausführung der Sonde,
- Fig. 6: eine charakteristische Sondensignal-Zeitkurve der zweiten Ausführung der Sonde,
- Fig. 7: einen vergrößerten Längsschnitt durch eine dritte Ausführung der Sonde,
- Fig. 8: einen vergrößerten Längsschnitt durch eine vierte Ausführung der Sonde,
- Fig. 9 und 10: einen vergrößerten Längsschnitt durch ein Rückgasrohr mit integrierter Sonde in zwei verschiedenen Ausführungen,
- Fig. 11: einen Längsschnitt durch eine weitere Ausführung einer Sonde,
- Fig. 12: eine Seitenansicht der Sonde nach Fig. 11,
- Fig. 13: einen Längsschnitt durch ein anderes Füllorgan mit integrierter Sonde,
- Fig. 14: einen Längsschnitt durch eine weitere Ausführung einer Sonde.

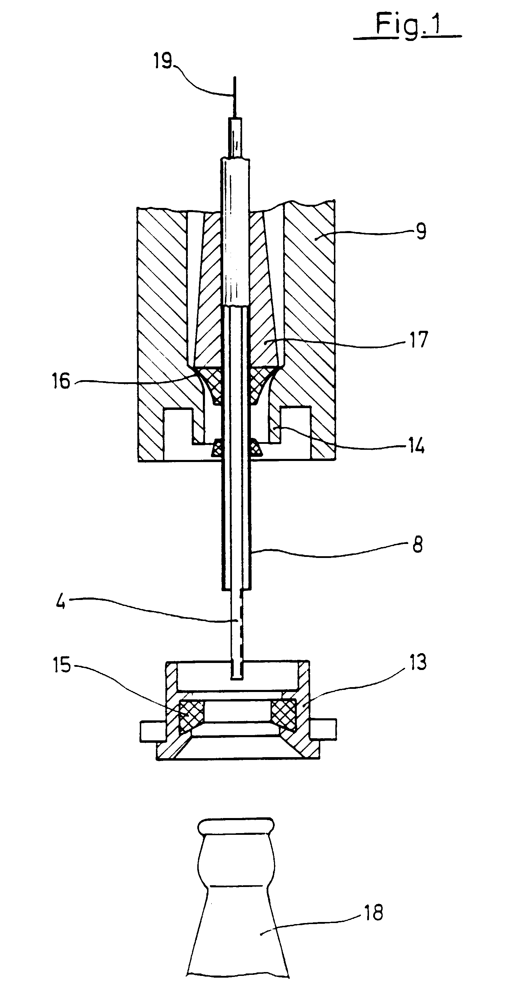

Das Füllorgan nach Fig. 1 ist Teil einer nicht weiter dargestellten Rotations-Gegendruckfüllmaschine zum Füllen von Flaschen 18 mit einem CO₂-haltigen Getränk. Es weist ein Gehäuse 9 auf, an dessen unterem Ende ein Füllstutzen 14 ausgebildet ist. An diesen schließt sich nach oben hin ein Ventilsitz 16 an, der mit einem höhenbeweglich im Gehäuse 9 gelagerten Ventilkörper 17 zusammenwirkt. Durch das so gebildete Flüssigkeitsventil wird der Auslauf des Getränks in die Flasche 18 gesteuert. Die Hubbewegung des Ventilkörpers 17 erfolgt durch einen nicht gezeigten Stellmotor. In einer Bohrung des Ventilkörpers 17 ist ein metallisches Rückgasrohr 8 befestigt, durch das in herkömmlicher Weise die zu füllende Flasche 18 mit Spanngas beaufschlagt und während des Einlaufens der Flüssigkeit das Spanngas aus der Flasche abgeleitet wird. Ferner ist eine höhenbeweglich gelagerte Zentrierglocke 13 mit einem Dichtring 15 vorgesehen, die für eine exakte Zentrierung der Flaschenmündung während des Einführens des Rückgasrohres 8 ins Flascheninnere und außerdem während des Füllvorgangs für eine gute Abdichtung zwischen der an das Füllorgan angepreßten Flasche 18 und dem Füllstutzen 14 sorgt.

Im Inneren des Rückgasrohres 8 ist konzentrisch eine stabförmige Sonde 4 befestigt. Diese ist nach oben hin aus dem Rückgasrohr 8 herausgeführt und über eine Leitung 19 mit einer nicht gezeigten Auswertungselektronik verbunden, die u.a. den Stellmotor für den Ventilkörper 17 steuert. Die Sonde 4 ragt nach unten hin aus dem Rückgasrohr 8 hervor, derart, daß sie bei gegen das Füllorgan angepreßter Flasche 18 in deren Innenraum eintaucht. Sobald während eines Füllvorgangs der Spiegel des in die Flasche 18 einlaufenden Getränks die Sonde 4 erreicht, werden durch diese kontinuierlich die Ist-Werte der momentanen Füllhöhe erfaßt und an die Auswertungselektronik weitergeleitet. Diese Werte werden beispielsweise mit Soll-Werten verglichen und dementsprechend der Ablauf des Füllvorgangs gesteuert, z.B. mittels des für die Füllhöhe maßgeblichen Flüssigkeitsventils 16, 17.

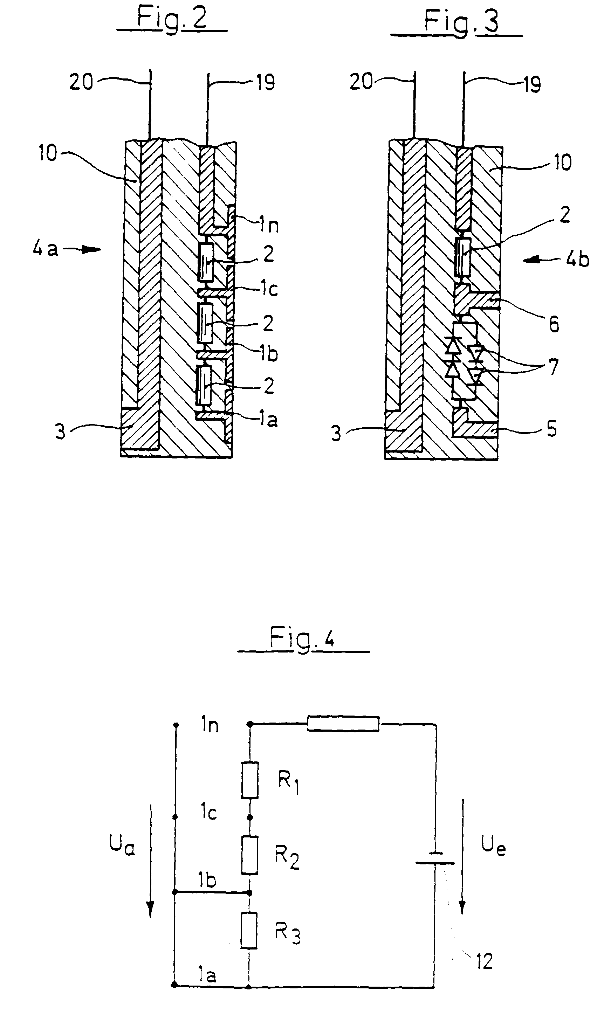

Bei der in Fig. 2 dargestellten ersten Ausführung der Sonde 4a weist deren aus einem Isolationsmaterial, z.B. Kunststoff oder Keramik, bestehender zylindrischer Sondenkörper 10 übereinander mehrere Meßstellen 1a, b, c, n, gebildet aus metallischen Kontaktzonen, auf. Die Meßstellen 1a bis 1n sind untereinander bzw. mit der Leitung 19, die durchs Innere des Sondenkörpers 10 verläuft, durch drei in Reihe geschaltete ohmsche Widerstände 2 verbunden. Dabei sind die drei Widerstände 2 zwischen die vier Meßstellen eingeschaltet; die oberste Meßstelle 1n ist direkt mit der Leitung 19 verbunden. Wenn n die Anzahl der Meßstellen ist, so beträgt demnach die Anzahl der Widerstände n minus 1. Auf der den Meßstellen 1a bis 1n gegenüberliegenden Seite der Sonde 4a ist ein Massekontakt 3 vorgesehen, der etwas tiefer endet als die unterste Meßstelle 1a. Der Massekontakt 3 ist über eine Leitung 20 mit dem metallischen Rückgasrohr 8 und damit mit dem Ventilgehäuse 9 als Masse verbunden.

Das Funktionsprinzip der Sonde 4a ist im Ersatzschaltbild gemäß Fig. 4 verdeutlicht. Dort ist über eine Spannungsquelle 12 eine definierte Eingangsspannung Ue an den Sondenstromkreis bzw. die Leitungen 19 und 20 angelegt, wobei drei ohmsche Widerstände 2 (R1, R2, R3) in Reihe geschaltet sind. Beim Füllvorgang erreicht der Flüssigkeitspegel der Reihe nach die Meßstellen 1a, 1b, 1c, 1n und verursacht so an den jeweiligen Meßstellen Masseverbindungen. Wie im Zusammenhang mit Fig. 2 ersichtlich, ändert sich in Abhängigkeit der Füllhöhe die an den ohmschen Widerständen 2 (in Fig. 4: R1 und R2) abfallende Ausgangsspannung Ua. Diese wird gemessen und in der Auswertungselektronik weiterverarbeitet.

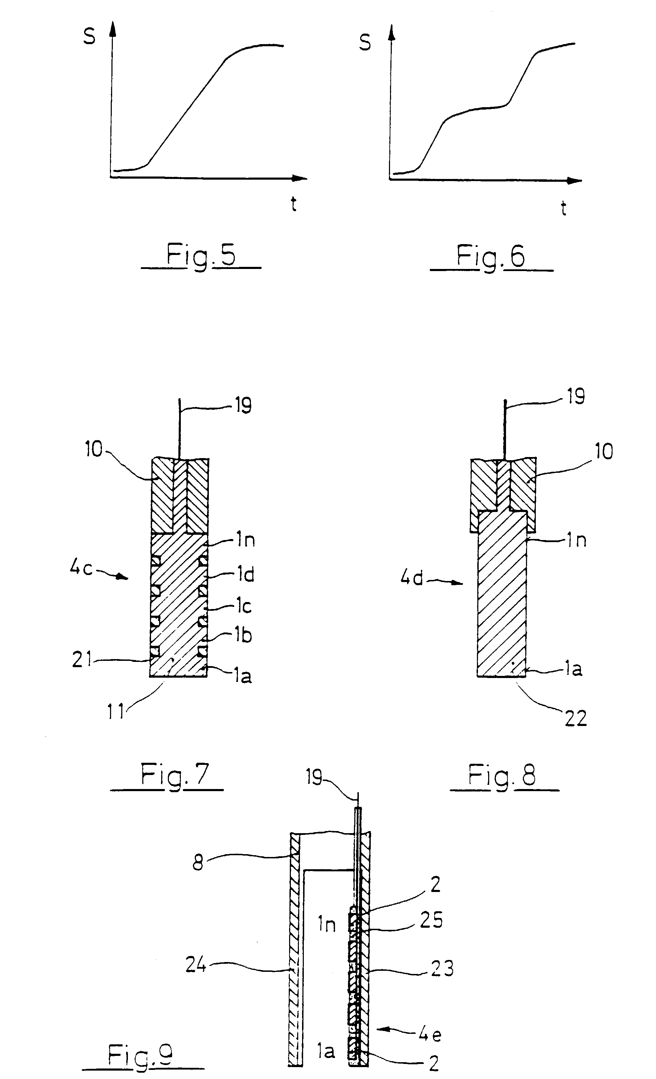

Der in Fig. 5 dargestellte kontinuierliche Verlauf des Meßsignals mit einem praktisch proportionalen Bereich im Bereich der Meßstellen 1a bis 1n wird dadurch realisiert, daß eine Vielzahl n von Meßstellen mit einer Vielzahl n minus 1 von Widerständen 2 hintereinander angeordnet sind. Es ergibt sich eine von der Zeit abhängige Signalfunktion S (t), deren Stufen mit zunehmender Zahl n immer kleiner werden, so daß man schließlich von einem stetigen, streng monotonen Signalverlauf sprechen kann. Aus der Steigung der Geraden ΔS zu Δt kann, nachdem die Signaldifferenz ΔS proportional zur Höhendifferenz ΔH ist, die Füllgeschwindigkeit bestimmt werden.

Bei der in Fig. 3 gezeigten zweiten Ausführung der Sonde 4b sind zwischen zwei übereinander angeordneten Meßstellen 5 und 6 mehrere antiparallel geschaltete Dioden 7 eingesetzt. Die so gebildete Schaltung ist über einen ohmschen Widerstand 2 an die Leitung 19 für das Sondensignal angebunden. Auch in diesem Falle wird eine Eingangsspannung Ue angelegt, vorzugsweise eine Wechselspannung oder zerhackte Gleichspannung. Die sich ergebende Signalfunktion S (t) ist in Fig. 6 dargestellt. Sie weist eine stufenförmige Grundform auf. Diese ist jedoch durch die Wirkung der Dioden 7 soweit abgeschwächt, daß sich insgesamt ein stetiger, monotoner Verlauf ergibt, d.h. es ist jedem momentanen Füllstand ein einziger, eindeutiger Spannungswert zugeordnet. Das Erreichen der ersten Stufe entspricht zudem einer definierten ersten Füllhöhe, das Erreichen der zweiten Stufe einer definierten zweiten Füllhöhe. Aus der Zeitdifferenz Δt zwischen diesen beiden Ereignissen wird über die Beziehung ΔH zu Δt die Füllgeschwindigkeit bestimmt.

Die Messung des Füllstandes kann auch rein kapazitiv erfolgen, wobei sich z.B. die reziproke Gesamtkapazität aus der Summe der reziproken Einzelkapazitäten in Abhängigkeit des Füllstandes ergibt.

Die von den Sonden 4a oder 4b abgegebenen Signale werden von der Auswertungselektronik verarbeitet und es können dementsprechend z.B. Füllhöhen, Füllgeschwindigkeiten und Nachfüllzeiten ermittelt werden. Auch kann durch Setzen beliebiger Schwellwerte und ein dadurch ausgelöstes sofortiges Schließen des Flüssigkeitsventils 16, 17 eine direkte, exakte Einstellung der Füllhöhe vorgenommen werden.

Bei der in Fig. 7 gezeigten dritten Ausführung der Sonde 4c sind die übereinanderliegenden Meßstellen 1a bis 1n direkt durch einen länglichen Widerstand 11 in Form eines mit Ringnuten 21 versehenen Rotationskörpers gebildet. Die Ringnuten 21 sind zwecks Trennung der Kontaktstellen mit einem Isolationsmaterial ausgefüllt. Am oberen Ende ist der Widerstand 11 direkt mit der Leitung 19 für das Sondensignal verbunden. Die elektrische Wirkung der Sonde 4c ist ähnlich wie bei der Sonde 4a.

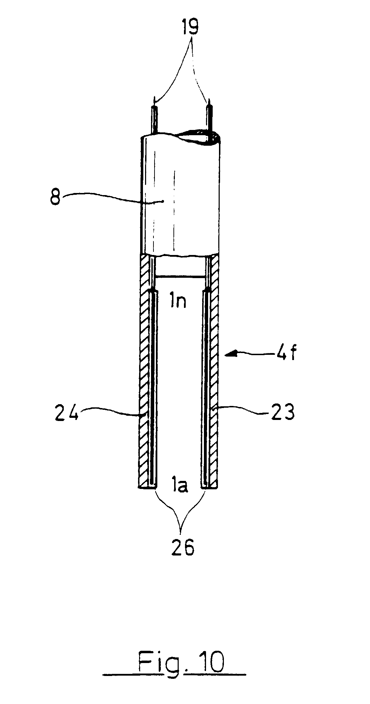

Bei der in Fig. 8 gezeigten vierten Ausführung der Sonde 4d sind eine unendliche Anzahl von Meßstellen 1a bis 1n und von in Reihe geschalteten Widerständen gemeinsam durch einen einzigen, zylindrischen Widerstandskörper 22 realisiert. Dieser ist am oberen Ende an die Leitung 19 für das Sondensignal angeschlossen und wirkt ähnlich wie die Sonde 4a nach Fig. 2, jedoch mit einer unendlichen Anzahl von Meßstellen 1a bis 1n.

Bei den Sonden 4c und 4d nach Fig. 7 und 8 ist kein Massekontakt vorgesehen. Die Masse wird hier entweder direkt durch die abzufüllende Flüssigkeit oder durch das nicht gezeigte metallische Rückgasrohr 8 gebildet.

Bei der in Fig. 9 gezeigten Ausführung ist kein stabförmiger Sondenkörper wie bei den Ausführungen 4a bis 4d vorhanden. Stattdessen sind die Kontaktstellen 1a bis 1n, die direkt durch die Oberflächen von ohmschen Widerständen 2 gebildet werden, übereinander an einem nach unten ragenden, fahnenartigen Ansatz 23 des Rückgasrohres 8 angeordnet. Die Widerstände 2 sind in einen Streifen 25 aus Isolationsmaterial eingebettet und leitend miteinander verbunden. Der oberste Widerstand 2 bzw. die oberste Meßstelle 1n ist mit der Leitung 19 für das Sondensignal verbunden, die isoliert im Inneren des Rückgasrohres 8 nach oben geführt ist. Der Massekontakt wird durch einen weiteren, fahnenförmig nach unten abstehenden Ansatz 24 des metallischen Rückgasrohres 8 gebildet. Die Funktion dieser fünften Ausführung der Sonde 4e entspricht wiederum im wesentlichen der ersten Ausführung 4a nach Fig. 2.

Die in Fig. 10 dargestellte sechste Ausführung der Sonde 4f unterscheidet sich von der Sonde 4e nach Fig. 9 dadurch, daß an den beiden nach unten abstehenden Fahnen 23, 24 des Rückgasrohres 8 jeweils ein allseitig isolierter Leiterstreifen 26 in senkrechte Lage befestigt ist. Die beiden parallelen Leiterstreifen 26 bilden somit einen Kondensator, der über eine oder zwei Leitungen 19 mit der Auswertungselektronik verbunden ist. Die Kapazität des Kondensators 26 ist direkt abhängig von der Höhe des Getränks im Bereich der Fahnen 23, 24. Auch hier ist eine unendliche Anzahl von Meßstellen 1a bis 1n realisiert, so daß sich ein exakt proportionaler Verlauf des eine Kapazität anzeigenden Meßsignals ergibt.

Bei der Sonde 4d nach Fig. 8 kann der eine zylindrische Außen- und Kontaktfläche aufweisende Widerstand 22 z.B. aus Metall bestehen. Ein anderes gut geeignetes Material ist Kunststoff mit eingelagerten Graphitteilchen, also elektrisch leitender Kunststoff. Durch entsprechende Bemessung des Anteils an Graphitteilchen läßt sich hierbei auf einfache Weise die gewünschte Widerstandscharakteristik von z.B. 200 Ohm pro Zentimeter Sondenlänge bzw. Eintauchtiefe festlegen. Ein weiterer Vorteil einer derartigen Sonde ist die Elastizität des Widerstandskörpers, wodurch Beschädigungen bei einem unerwünschten Kontakt zwischen Flasche 18 und Widerstand 22 verhindert werden können.

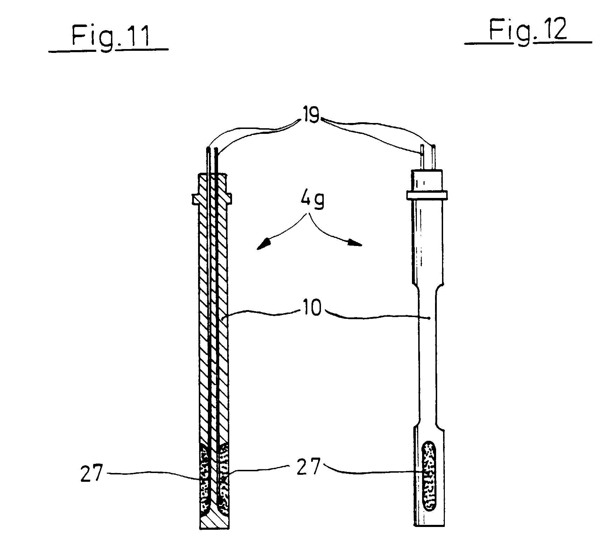

Bei der Sonde 4g nach Fig. 11 und 12 besteht der stabförmige Sondenkörper 10 aus nicht leitendem Kunststoff. Am unteren, freien Meßende der Sonde 4g sind am Umfang des Sondenkörpers 10 an diametral gegenüberliegenden Stellen zwei Kissen 27 aus Kunststoff mit eingelagerten Graphitteilchen eingebettet. Die Kissen 27 haben eine längliche Grundform und verlaufen auf gleicher Höhe parallel zur Sondenachse. Über im Inneren des Sondenkörpers 10 verlaufende Leitungen 19 aus Stahldraht sind sie mit der nicht gezeigten Auswertungselektronik verbunden. Der Sondenkörper 10 hat im Bereich der Kissen 27 eine zylindrische Mantelfläche, mit der die Kontaktfläche der Kissen 27 fluchtet. Darüber sind zur Verringerung des Sondenquerschnitts beiderseits längliche Ausfräsungen vorgesehen, während der obere Anschlußteil der Sonde 4g wiederum im wesentlichen zylindrisch ist.

Auch bei der Sonde 4g ergibt sich an den beiden Leitungen 19 ein ohmscher Widerstand, der von der Eintauchtiefe in eine leitende Flüssigkeit linear abhängig ist. Es läßt sich daher auf einfache Weise das gewünschte kontinuierliche, proportionale Meßsignal erzeugen.

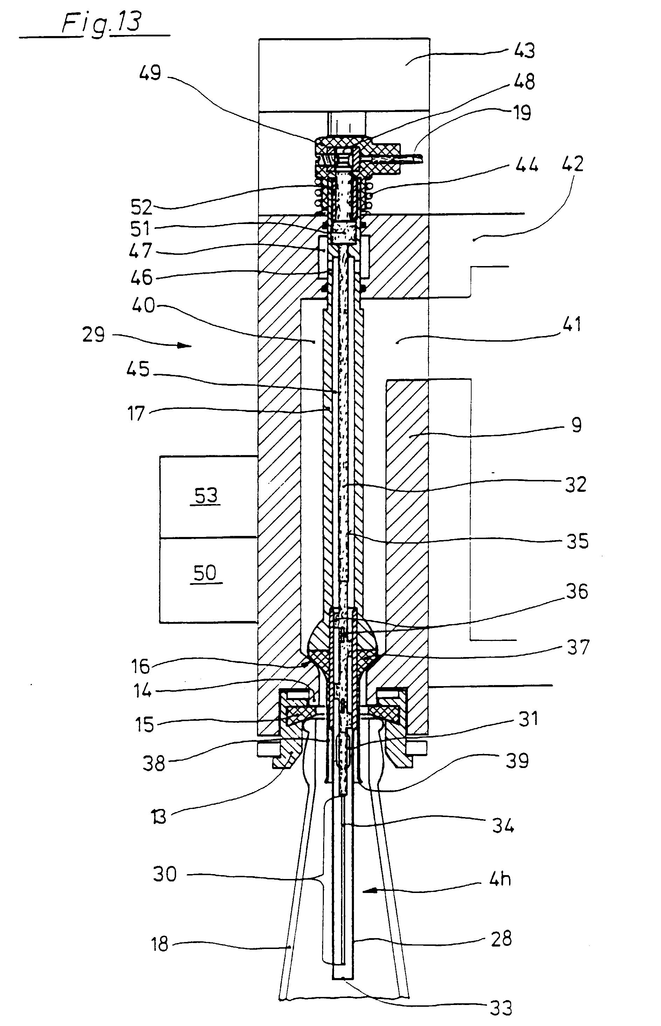

Das Füllorgan 29 nach Fig. 13 ist Teil einer nicht weiter dargestellten Rotations-Gegendruckfüllmaschine zum Füllen von Flaschen 18 mit einem CO₂-haltigen Getränk. Es weist ein Gehäuse 9 mit einer senkrechten Bohrung 40 und einem seitlichen Flüssigkeitseinlaß 41 auf, der mit einem ringförmigen Flüssigkeitskessel 42 in Verbindung steht. Am unteren Ende des Gehäuses 9 bzw. der Bohrung 40 ist ein ringförmiger Füllstutzen 14 ausgebildet. An diesen schließt sich nach oben hin ein konischer Ventilsitz 16 an, der mit einem höhenbeweglich im Gehäuse 9 gelagerten Ventilkörper 17 bzw. dessen elastischem Dichtkörper 37 zusammenwirkt. Durch das so gebildete Flüssigkeitsventil wird der Auslauf des Getränks über den Füllstutzen 14 in die Flasche 18 gesteuert und zwar mit Hilfe eines auf den Ventilkörper 17 im Schließsinne wirkenden Stellmotors 43 und einer im Öffnungssinne einwirkenden Feder 44.

In das untere Ende einer Längsbohrung 45 im Ventilkörper 17 ist ein im wesentlichen zylindrisches Gasrohr 28 aus rostfreiem Stahl eingeschraubt. Dieses steht über die Längsbohrung 45 und mehrere an deren oberem Ende ausgebildete Querbohrungen 46 mit einer ringförmigen Gaskammer 47 im Gehäuse 9 in Verbindung. Diese ist über mehrere nicht gezeigte Leitungen und ein steuerbares Spanngasventil 50 mit einem nicht gezeigten ringförmigen Spanngaskanal verbunden.

Ferner ist eine höhenbeweglich gelagerte Zentrierglocke 13 mit einem Dichtring 15 vorgesehen, die für eine exakte Zentrierung der Flaschenmündung während des Anhebens einer Flasche 18 durch eine nicht gezeigte Hubeinrichtung und des dabei erfolgenden Einführens des Gasrohres 28 ins Flascheninnere und außerdem während des Füllvorgangs für eine gas- und flüssigkeitsdichte Abdichtung zwischen der an das Füllorgan 29 angepreßten Flasche 18 und dem Füllstutzen 14 sorgt.

Im Inneren des Gasrohres 28 und der damit fluchtenden Längsbohrung 45 sitzt konzentrisch eine stabförmige Sonde 4h mit einem länglichen Sondenkörper 32. Dieser weist einen durchgehenden runden Draht 34 aus rostfreiem Stahl mit einem Durchmesser von ca. einem Millimeter auf. Dieser ist in seinem mittleren und oberen Bereich vollständig von einem im wesentlichen zylindrischen Isoliermantel 35 aus Kunststoff umgeben. Der Isoliermantel 35 weist an seinem Umfang gleichmäßig verteilt mehrere einstückig angeformte Ansätze 36 in Form von Rippen oder Stegen auf, welche den Sondenkörper 32 in der Längsbohrung 45 bzw. im Gasrohr 28 exakt zentrieren, so daß zwischen ihm und der Innenwand des Gasrohres 28 und der Längsbohrung 45 ein durchgehender ringförmiger Gaskanal gebildet wird, der mit der Gaskammer 47 verbunden ist.

Am oberen Ende weist der Sondenkörper 32 eine zylindrische Verdickung 51 auf, die mittels einer Schraubhülse 52 in einer korrespondierenden Bohrung des Ventilkörpers 17 gasdicht und austauschbar befestigt ist. Der höhenbewegliche Ventilkörper 17 ist nach oben hin aus dem Gehäuse 9 herausgeführt und wird von einem mit dem Draht 34 leitend verbundenen Anschlußnippel 48 überragt. Auf diesem ist ein Stecker 49 mit einer elektrischen Leitung 19, die zu einer nicht gezeigten Auswertungselektronik führt, lösbar befestigt.

Der untere Bereich des Drahtes 34 ist vollständig metallisch blank und bildet eine längliche Meßzone 30 von ca. 50 mm Länge. Der Draht 34 endet mit Abstand über der unteren Öffnung 33 des Gasrohres 28, so daß die Meßzone 30 vollständig innerhalb des Gasrohres 28 liegt und daher gut gegen mechanische Beschädigungen geschützt ist. Etwas über dem oberen Ende der Meßzone 30 weist das Gasrohr 28 mehrere zusätzliche seitliche Öffnungen 31 auf, die noch innerhalb der angepreßten Flasche 18 liegen und mit deren Innenraum kommunizieren. Die Öffnungen 31 sind mit Abstand von einer rotationssymmetrischen Schutzhülse 38 umgeben, die über den Öffnungen 31 am Gasrohr 28 befestigt und nach unten hin offen ist. Die Schutzhülse 38 verhindert das Einlaufen des Getränks aus dem Füllstutzen 14 durch die Öffnungen 31 ins Innere des Gasrohres 28. Der Füllstand innerhalb des Gasrohres 28 entspricht somit exakt dem Füllstand in der Flasche 18 und steigt ruhig und turbulenzfrei an. Dadurch ist eine besonders genaue Messung des momentanen Füllstandes bzw. dessen Umformung in ein kontinuierliches Meßsignal möglich.

Die Schutzhülse 38 ist am unteren Ende mit einem Abweiskegel 39 versehen, welcher das einlaufende Getränk nach außen an die Innenwand der Flasche 18 ablenkt. Nach oben hin schließt sich an die Schutzhülse 38 der nach unten hin mit einer zylindrischen Verlängerung versehene Dichtkörper 37 des Flüssigkeitsventils an, der zusätzlich mit einen Drall des einlaufenden Getränks erzeugenden Leitflächen versehen sein kann. Das Gasrohr 28 bildet mit dem Dichtkörper 37 und der Schutzhülse 38 eine Baueinheit, die nach Entfernen des Füllstutzens 14 vom Ventilkörper 17 abgeschraubt werden kann. Der Sondenkörper 32 wird dann im Bereich der länglichen Meßzone 30 frei zugänglich. Er kann seinerseits nach Entfernen des Stellmotors 43, des Steckers 49 und der Schraubhülse 52 nach oben hin aus dem Ventilkörper 17 und dem Gasrohr 28 herausgezogen werden. Neben dem Gasrohr 28 besteht auch der Ventilkörper 17 aus rostfreiem Stahl und ist an Masse geschaltet. Das Gasrohr 28 dient daher als Masseelektrode.

Sobald während eines Füllvorgangs der Spiegel des in die Flasche 18 einlaufenden Getränks die Sonde 4h erreicht, werden durch diese kontinuierlich die Ist-Werte der momentanen Füllhöhe erfaßt und an die Auswertungselektronik weitergeleitet. Diese Werte werden beispielsweise mit Soll-Werten verglichen und dementsprechend der Ablauf des Füllvorgangs gesteuert, z.B. durch sofortiges Absenken des Ventilkörpers 17 mittels des Stellmotors 43 bei Erreichen der vorgewählten Füllhöhe. Während des Füllens entweicht das aus der Flasche 18 verdrängte Gas zunächst über die zusätzlichen Öffnungen 31 sowie über die untere Öffnung 33 und, sobald letztere von dem Getränk verschlossen ist, nur noch über die zusätzlichen Öffnungen 31. Dabei ist die Gaskammer 47 über ein Rückgasventil 53 an einen nicht gezeigten ringförmigen Rückgaskanal angeschlossen.

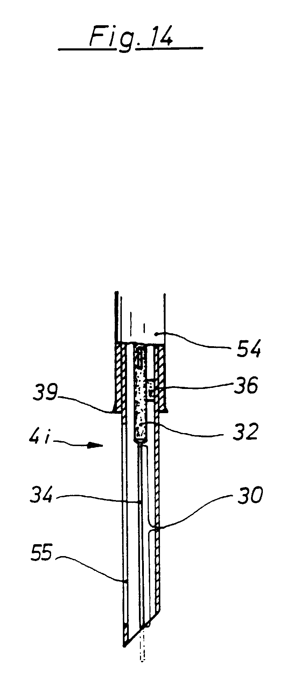

Bei der Sonde 4i nach Fig. 14 ist der Sondenkörper 32 identisch mit demjenigen nach Fig. 13. Das den Draht 34 über die isolationsfreie längliche Meßzone 30 umgebende, als Masseelektrode dienende Gasrohr 54 ist am unteren Ende schräg abgeschnitten, so daß seine schrägliegende Öffnung in etwa auf Höhe des freien Endes des Drahtes 34 liegt. Hierdurch wird das Einfädeln des Gasrohres 54 in die Öffnung einer Flasche 18 erleichtert und Beschädigungen werden vermieden. Außerdem wirkt das einseitige Eintauchen des Gasrohres 54 in die ansteigende Flüssigkeit einem verzögerten Anstieg innerhalb des Gasrohres 54 entgegen. Im gleichen Sinne wirken auch drei über den Umfang des Gasrohres 54 verteilte schmale Längsschlitze 55, die die Meßzone 30 im wesentlichen überdecken und etwas höher als diese enden. Die Schlitze 55 dienen somit auch der Abfuhr des Rückgases, so daß keine zusätzlichen Öffnungen 31 und keine Schutzhülse 38 erforderlich ist. Der Abweiskegel 39 ist direkt am Gasrohr 54 ausgebildet.

Wie in Fig. 14 strichpunktiert angedeutet ist, kann der Draht 34 auch etwas über die untere Öffnung des Gasrohres 54 überstehen. Hierdurch wird das Eintauch- bzw. Anstiegverhalten der Flüssigkeit weiter verbessert.

## Patentansprüche

1. Sonde zur Einstellung der Füllhöhe in Füllmaschinen für Gefäße, mit einem länglich in das zu befüllende Gefäß eintauchenden Sondenkörper mit mehreren Meßstellen für den Füllstand, **dadurch gekennzeichnet,** daß die Meßstellen (1a bis 1n; 5, 6) über mindestens einen ohmschen Widerstand (2) und/oder mindestens zwei antiparallel geschaltete Dioden (7) und/oder mindestens einen Kondensator (26) miteinander verbunden sind, und daß die Meßstellen (1a bis 1n ; 5,6) mit einer Auswertungselektronik zur Weiterverarbeitung des Sondensignales verbunden sind.

2. Sonde nach Anspruch 1 dadurch gekennzeichnet, daß sie einen Massekontakt (3) aufweist, der zumindest so tief in das Gefäß eintaucht, wie die tiefste Meßstelle (1a; 5).

3. Sonde nach Anspruch 2, dadurch gekennzeichnet, daß der Massekontakt (3) am Sondenkörper (10) ausgebildet ist.

4. Sonde nach Anspruch 2, dadurch gekennzeichnet, daß der Massekontakt durch ein Füllrohr oder Gasrohr (8) eines Füllorgans gebildet wird.

5. Sonde nach einem der Ansprüche 1 bis 4, dadurch gekennzeichnet, daß die Meßstellen (1a bis 1n; 5, 6) durch Kontaktzonen aus leitendem Material gebildet werden, die leitend mit mindestens einem elektronischen Bauelement (2, 7) verbunden sind.

6. Sonde nach Anspruch 5, dadurch gekenzeichnet, daß neben den Kontaktzonen (1a bis 1n; 5, 6) auch die Bauelemente (2, 7) unmittelbar in oder am Sondenkörper (10) befestigt sind.

7. Sonde nach einem der Ansprüche 1 bis 4, dadurch gekennzeichnet, daß die Meßstellen (1a bis 1n) durch die leitende Oberfläche von Widerständen (2, 11, 22) gebildet werden.

8. Sonde nach Anspruch 7, dadurch gekennzeichnet, daß eine Vielzahl von Meßstellen (1a bis 1n) von einem einzigen, länglichen Widerstand (11, 22) gebildet wird.

9. Sonde nach Anspruch 8, dadurch gekennzeichnet, daß der Widerstand (11) zwischen Kontaktzonen (1a bis 1n) mit Einschnürungen versehen ist, die mit Isoliermaterial ausgefüllt sind.

10. Sonde nach einem der Ansprüche 1 bis 8, dadurch gekennzeichnet, daß eine Vielzahl von Meßstellen (1a bis 1n) zu einer einzigen, länglichen Meßstelle zusammengefaßt ist.

11. Sonde nach einem der Ansprüche 1 bis 10, dadurch gekennzeichnet, daß sie einen eigenen, vorzugsweise stab- oder leistenförmigen Sondenkörper (10) aufweist.

12. Sonde nach einem der Ansprüche 1 bis 10, dadurch gekennzeichnet, daß die Meßstellen (1a bis 1n) und ggf. der Massekontakt an einem Füllrohr oder Gasrohr (8) eines Füllorgans angeordnet sind.

13. Sonde nach einem der Ansprüche 1 bis 12, dadurch gekennzeichnet, daß die Meßstellen (1a bis 1n; 5, 6) und die elektronischen Bauelemente (2, 6, 11, 22) durch eine einzige Leitung (19) mit der Auswertungselektronik verbunden sind.

14. Sonde nach einem der Ansprüche 8 bis 13, dadurch gekennzeichnet, daß der Widerstand (22) aus Kunststoff mit eingelagerten Graphitteilchen besteht.

15. Sonde nach Anspruch 14, dadurch gekennzeichnet, daß der Widerstand (22) zylindrisch ist und seine Außenfläche als Kontaktfläche dient.

16. Sonde nach Anspruch 14, dadurch gekennzeichnet, daß in einem stabförmigen Sondenkörper (10) aus Isoliermaterial an zwei diametral gegenüberliegenden Stellen zwei längliche Kunststoffkissen (27) mit eingelagerten Graphitteilchen eingebettet sind.

17. Sonde nach Anspruch 16, dadurch gekennzeichnet, daß an jedes Kunststoffkissen (27) eine durch den Sondenkörper (10) führende Leitung (19) angeschlossen ist.

18. Sonde nach einem der Ansprüche 1 bis 17, dadurch gekennzeichnet, daß die Meßstellen bzw. die längliche Meßstelle (30) im Inneren eines in das zu füllende Gefäß eintauchenden, unten offenen Gasrohres (28) eines Füllorgans (29) liegen.

19. Sonde nach Anspruch 18, dadurch gekennzeichnet, daß der längliche Sondenkörper (32) unter Bildung eines Ringraums konzentrisch zur Mittelachse des Gasrohres (28) angeordnet ist.

20. Sonde nach Anspruch 18 oder 19, dadurch gekennzeichnet, daß der Sondenkörper (32) mit Abstand über der unteren Öffnung (33) des Gasrohres (28) endet.

21. Sonde nach einem der Ansprüche 18 bis 20, dadurch gekennzeichnet, daß der Sondenkörper (32) einen " Metalldraht (34) aufweist, der in einem die längliche Meßstelle (30) bildenden Bereich allseitig frei liegt und im darüberliegenden Bereich mit einem Isoliermantel (35) versehen ist.

22. Sonde nach Anspruch 21, dadurch gekennzeichnet, daß der Metalldraht (34) aus rostfreiem Stahl besteht und einen Durchmesser von ca. 1 mm aufweist.

23. Sonde nach einem der Ansprüche 18 bis 22, dadurch gekennzeichnet, daß der Sondenkörper (32) mit mehreren stegartigen Ansätzen (36) versehen ist, welche ihn im Gasrohr (28) fixieren.

24. Sonde nach Anspruch 23, dadurch gekennzeichnet, daß die über den Umfang des Sondenkörpers (32) verteilten Ansätze (36) einstückig mit dem Isoliermantel (35) ausgebildet sind.

25. Sonde nach einem der Ansprüche 18 bis 24, dadurch gekennzeichnet, daß der Sondenkörper (32) starr im Gasrohr (28) angeordnet ist.

26. Sonde nach einem der Ansprüche 18 bis 25, dadurch gekennzeichnet, daß die zusätzliche Öffnung (31) im Gasrohr (28) gegen das Eindringen von Flüssigkeit abgeschirmt ist.

27. Sonde nach Anspruch 26, dadurch gekennzeichnet, daß das Gasrohr (28) auf Höhe der zusätzlichen Öffnung (31) mit Abstand von einer Schutzhülse (38) umgeben ist, die am oberen Ende flüssigkeitsdicht am Gasrohr (28) befestigt und am unteren Ende offen ist.

28. Sonde nach Anspruch 27, dadurch gekennzeichnet, daß die Schutzhülse (38) vorzugsweise am unteren Ende einen Abweiskegel (39) für die einlaufende Flüssigkeit trägt.

29. Sonde nach Anspruch 27 oder 28, dadurch gekennzeichnet, daß sich nach oben hin an die Schutzhülse (38) ein auf dem Gasrohr (28) befestigter Dichtkörper (37) eines Ventilkörpers (17) anschließt.

30. Sonde nach einem der Ansprüche 27 bis 29, dadurch gekennzeichnet, daß das Gasrohr (28) zusammen mit der Schutzhülse (38) und ggf. dem Dichtkörper (37) lösbar im Ventilkörper (17) des Flüssigkeitsventils befestigt ist.

31. Sonde nach einem der Ansprüche 18 bis 30, dadurch gekennzeichnet, daß das Gasrohr (28) aus rostfreiem Stahl besteht und als Masseelektrode ausgebildet ist.

32. Sonde nach einem der Ansprüche 18 bis 31, dadurch gekennzeichnet, daß das Gasrohr (54) am unteren Ende im Bereich seiner Öffnung abgeschrägt ist.

33. Sonde nach einem der Ansprüche 18 bis 32, dadurch gekennzeichnet, daß das Gasrohr (54) mit mindestens einem Längsschlitz (55) versehen ist, der die längliche Meßstelle (30) im wesentlichen überdeckt.

34. Sonde nach einem der Ansprüche 18 bis 33, dadurch gekennzeichnet, daß der Sondenkörper (32) geringfügig aus der unteren Öffnung des Gasrohres (54) herausragt.

35. Sonde nach einem der Ansprüche 18 bis 34, dadurch gekennzeichnet, daß die Meßstellen bzw. die längliche Meßstelle (30) vollständig im Inneren des Gasrohres (28, 54) liegen.

36. Sonde nach einem der Ansprüche 18 bis 35, dadurch gekennzeichnet, daß das Gasrohr (28) oberhalb der höchsten Meßstelle bzw. des oberen Endes der länglichen Meßstelle (30) mindestens eine mit dem Inneren eines Gefäßes in Verbindung stehende zusätzliche Öffnung (31) aufweist.

## Claims

1. A probe for adjusting the filling level in filling machines for vessels, comprising a probe body which is longitudinally immersed in the vessel to be filled and includes a plurality of measuring points for the filling level, **characterized in that** said measuring points (1a to 1n; 5, 6) are interconnected via at least one ohmic resistor (2) and/or at least two antiparallel connected diodes (7) and/or at least one capacitor (26) and that said measuring points (1a to 1n; 5, 6) are connected to an electronic evaluation means for the further processing of a probe signal.

2. A probe according to claim 1, characterized in that said probe comprises a ground contact (3) which is immersed into said vessel at least at such a low level as the lowest measuring point (1a; 5).

3. A probe according to claim 2, characterized in that said ground contact (3) is formed on said probe body (10).

4. A probe according to claim 2, characterized in that said ground contact is formed by a filling pipe or gas pipe (8) of a filling unit.

5. A probe according to any one of claims 1 to 4, characterized in that said measuring points (1a to 1n; 5, 6) are formed by contact zones of conductive material which are conductively connected to at least one electronic component (2, 7).

6. A probe according to claim 5, characterized in that, apart from said contact zones (1a to 1n; 5, 6), said components (2, 7) are also directly mounted in or on said probe body (10).

7. A probe according to any one of claims 1 to 4, characterized in that said measuring points (1a to 1n) are formed by the conductive surface of resistors (2, 11, 22).

8. A probe according to claim 7, characterized in that a plurality of measuring points (1a to 1n) are formed by a single elongated resistor (11, 22).

9. A probe according to claim 8, characterized in that said resistor (11) is provided between contact zones (1a to 1n) with restricted portions that are filled with insulating material.

10. A probe according to any one of claims 1 to 8, characterized in that a plurality of measuring points (1a to 1n) are combined to form one single elongated measuring point.

11. A probe according to any one of claims 1 to 10, characterized in that it has a separate, preferably rod- or strip-shaped probe body (10).

12. A probe according to any one of claims 1 to 10, characterized in that said measuring points (1a to 1n) and possibly said ground contact are arranged on a filling pipe or gas pipe (8) of a filling unit.

13. A probe according to any one of claims 1 to 12, characterized in that said measuring points (1a to 1n; 5, 6) and said electronic components (2, 6, 11, 22) are connected through a single line (19) to said electronic evaluation means.

14. A probe according to any one of claims 8 to 13, characterized in that said resistor (22) consists of plastics including enclosed graphite particles.

15. A probe according to claim 14, characterized in that said resistor (22) is cylindrical and its outer surface serves as a contact surface.

16. A probe according to claim 14, characterized in that two elongated plastic pads (27) with enclosed graphite particles are embedded in a rod-shaped probe body (10) of insulating material at two diametrically opposed points.

17. A probe according to claim 16, characterized in that a line (19) which leads through said probe body (10) is connected to each of said plastic pads (27).

18. A probe according to any one of claims 1 to 17, characterized in that said measuring points or said elongated measuring point (30) are positioned inside a gas pipe (28) of a filling unit (29), said gas pipe (28) being immersed into said vessel to be filled and downwardly open.

19. A probe according to claim 18, characterized in that said elongated probe body (32) is concentrically arranged relative to the center axis of said gas pipe (28) to form an annular chamber.

20. A probe according to claim 18 or 19, characterized in that said probe body (32) terminates at a distance above the lower opening (33) of said gas pipe (28).

21. A probe according to any one of claims 18 to 20, characterized in that said probe body (32) includes a metal wire (24) which is exposed on all sides in an area forming said elongated measuring point (30) and is provided with an insulating wrapper (35) in the area positioned thereabove.

22. A probe according to claim 21, characterized in that said metal wire (34) consists of stainless steel and has a diameter of about 1 mm.

23. A probe according to any one of claims 18 to 22, characterized in that said probe body (32) is provided with a plurality of web-like attachments (36) which fix said body within said gas pipe (28).

24. A probe acccording to claim 23, characterized in that said attachments (36) which are distributed over the circumference of said probe body (32) are integrally formed with said insulating wrapper (35).

25. A probe according to any one of claims 18 to 24, characterized in that said probe body (32) is rigidly arranged within said gas pipe (28).

26. A probe according to any one of claims 18 to 25, characterized in that an additional opening (31) is shielded in said gas pipe (28) against penetrating liquid.

27. A probe according to claim 26, characterized in that said gas pipe (28) is surrounded at the level of said additional opening (31) at some distance by a protective cover (38) which is mounted at the upper end in liquid-tight fashion on said gas pipe (28) and is open at the lower end.

28. A probe according to claim 27, characterized in that said protective cover (38) carries a deflection cone (39) for inflowing liquid preferably at the lower end.

29. A probe according to claim 27 or 28, characterized in that said protective cover (38) is upwardly followed by a sealing body (37) of a valve body (17), said sealing body (37) being mounted on said gas pipe (28).

30. A probe according to any one of claims 27 to 29, characterized in that said gas pipe (28) is detachably mounted within said valve body (17) of said liquid valve together with said protective cover (38) and, optionally, with said sealing body (37).

31. A probe according to any one of claims 18 to 30, characterized in that said gas pipe (28) is made of stainless steel and formed as a ground electrode.

32. A probe according to any one of claims 18 to 31, characterized in that said gas pipe (54) is beveled at its lower end in the area of its opening.

33. A probe according to any one of claims 18 to 32, characterized in that said gas pipe (54) is provided with at least one longitudinal slot (55) which substantially covers the elongated measuring point (30).

34. A probe according to any one of claims 18 to 33, characterized in that said probe body (32) slightly projects from the lower opening of said gas pipe (54).

35. A probe according to at least one of claims 18 to 34, characterized in that said measuring points or said elongated measuring point (30) are fully positioned within said gas pipe (28, 54).

36. A probe according to any one of claims 18 to 35, characterized in that said gas pipe (28) is provided above the highest measuring point or the upper end of said elongated measuring point (30) with at least one additional opening (31) that communicates with the interior of a vessel.

## Revendications

1. Sonde pour le réglage de la hauteur de remplissage dans des remplisseuses de récipients, comportant un corps allongé plongeant dans le récipient à remplir et ayant plusieurs emplacements de mesure du niveau de remplissage, caractérisée par le fait que les emplacements de mesure (1a à 1n ; 5, 6) sont reliés entre eux par au moins une résistance idéale (2) et/ou au moins deux diodes montées tête-bêche (7) et/ou au moins un condensateur (26) et reliés à une électronique d'exploitation pour le traitement du signal de la sonde.

2. Sonde selon la revendication 1, caractérisée par le fait qu'elle présente un contact de masse (3) qui plonge dans le récipient au moins aussi profondément que l'emplacement de mesure le plus bas ( 1a ; 5).

3. Sonde selon la revendication 2, caractérisée par le fait que le contact de masse (3) est fait sur le corps (10) de la sonde.

4. Sonde selon la revendication 2, caractérisée par le fait que le contact de masse est formé par un tuyau de remplissage ou tuyau à gaz (8) d'un organe de remplissage.

5. Sonde selon l'une des revendications 1 à 4, caractérisée par le fait que les emplacements de mesure ( 1a à 1n ; 5, 6) sont formés par des zones de contact en matière conductrice qui sont reliées électriquement à au moins un composant électronique (2, 7).

6. Sonde selon la revendication 5, caractérisée par le fait qu'à côté des zones de contact ( 1a à 1n ; 5, 6), les composants (2, 7) aussi sont fixés directement dans ou sur le corps (10) de la sonde.

7. Sonde selon l'une des revendications 1 à 4, caractérisée par le fait que les emplacements de mesure (1a à 1n) sont formés par la surface conductrice de résistances (2, 11, 22).

8. Sonde selon la revendication 7, caractérisée par le fait qu'un grand nombre d'emplacements de mesure (1a à 1n) sont formés par une seule résistance allongée (11, 22).

9. Sonde selon la revendication 8, caractérisée par le fait que la résistance (11) est, entre des zones de contact (1a à 1n), pourvue de rétrécissements qui sont remplis de matière isolante.

10. Sonde selon l'une des revendications 1 à 8, caractérisée par le fait qu'un grand nombre d'emplacements de mesure (1a à 1n) sont réunis en un seul emplacement de mesure allongé.

11. Sonde selon l'une des revendications 1 à 10, caractérisée par le fait qu'elle présente un corps propre en forme de barre ou de bande (10).

12. Sonde selon l'une des revendications 1 à 10, caractérisée par le fait que les emplacements de mesure (1a à 1n) et éventuellement le contact de masse sont situés sur un tuyau de remplissage ou tuyau à gaz (8) d'un organe de remplissage.

13. Sonde selon l'une des revendications 1 à 12, caractérisée par le fait que les emplacements de mesure (1a à 1n ; 5, 6) et les composants électroniques (2, 6, 11, 22) sont reliés à l'électronique d'exploitation par une ligne unique (19).

14. Sonde selon l'une des revendications 8 à 13, caractérisée par le fait que la résistance (22) est constituée de plastique contenant des particules de graphite.

15. Sonde selon la revendication 14, caractérisée par le fait que la résistance (22) est cylindrique et sa surface extérieure sert de surface de contact.

16. Sonde selon la revendication 14, caractérisée par le fait que dans un corps de sonde en forme de barre (10) en matière isolante sont encastrés à deux endroits diamétralement opposés deux coussins en plastique allongés (27) contenant des particules de graphite.

17. Sonde selon la revendication 16, caractérisée par le fait qu'à chaque coussin en plastique (27) est connectée une ligne (19) qui traverse le corps de sonde (10).

18. Sonde selon l'une des revendications 1 à 17, caractérisée par le fait que les emplacements de mesure ou l'emplacement de mesure allongé (30) sont situés à l'intérieur d'un tuyau à gaz (28), ouvert en bas et plongeant dans le récipient à remplir, d'un organe de remplissage (29).

19. Sonde selon la revendication 18, caractérisée par le fait que le corps de sonde allongé (32) est placé coaxialement au tuyau à gaz (28) avec formation d'un espace annulaire.

20. Sonde selon l'une des revendications 18 et 19, caractérisée par le fait que le corps de sonde (32) se termine une certaine distance au-dessus de l'orifice inférieur (33) du tuyau à gaz (28).

21. Sonde selon l'une des revendications 18 à 20, caractérisée par le fait que le corps de sonde (32) présente un fil métallique (34) qui est à nu de toutes parts dans une zone formant l'emplacement de mesure allongé (30) et pourvu d'une gaine isolante (35) dans la zone située au-dessus.

22. Sonde selon la revendication 21, caractérisée par le fait que le fil métallique (34) est en acier inoxydable et d'environ 1 mm de diamètre.

23. Sonde selon l'une des revendications 18 à 22, caractérisée par le fait que le corps de sonde (32) est pourvu de plusieurs appendices du genre nervure (36) qui le fixent dans le tuyau à gaz (28).

24. Sonde selon la revendication 23, caractérisée par le fait que les appendices (36), répartis à la périphérie du corps de sonde (32), font corps avec la gaine isolante (35).

25. Sonde selon l'une des revendications 18 à 24, caractérisée par le fait que le corps de sonde (32) est monté rigidement dans le tuyau à gaz (28).

26. Sonde selon l'une des revendications 18 à 25, caractérisée par le fait que l'orifice supplémentaire (31) du tuyau à gaz (28) est protégé contre l'entrée de liquide.

27. Sonde selon la revendication 26, caractérisée par le fait que le tuyau à gaz (28) est entouré à une certaine distance, à la hauteur de l'orifice supplémentaire (31), d'une douille protectrice (38) qui est, à son extrémité supérieure, fixée de manière étanche au liquide au tuyau à gaz (28) et est ouverte à son extrémité inférieure.

28. Sonde selon la revendication 27, caractérisée par le fait que la douille protectrice (38) porte de préférence à son extrémité inférieure un cône de rejet (39) rejetant le liquide qui entre.

29. Sonde selon l'une des revendications 27 et 28, caractérisée par le fait que la douille protectrice (38) est suivie vers le haut d'un corps obturateur (37), fixé sur le tuyau à gaz (28), d'un obturateur (17).

30. Sonde selon l'une des revendications 27 à 29, caractérisée par le fait que le tuyau à gaz (28) est, conjointement avec la douille protectrice (38) et éventuellement le corps obturateur (37), fixé de manière amovible dans l'obturateur (17) de la vanne à liquide.

31. Sonde selon l'une des revendications 18 à 30, caractérisée par le fait que le tuyau à gaz (28) est en acier inoxydable et forme une électrode de masse.

32. Sonde selon l'une des revendications 18 à 31, caractérisée par le fait que le tuyau à gaz (54) est biseauté à son extrémité inférieure dans la zone de son orifice.

33. Sonde selon l'une des revendications 18 à 32, caractérisée par le fait que le tuyau à gaz (54) est pourvu d'au moins une fente longitudinale (55) qui recouvre sensiblement l'emplacement de mesure allongé (30).

34. Sonde selon l'une des revendications 18 à 33, caractérisée par le fait que le corps de sonde (32) fait légèrement saillie de l'orifice inférieur du tuyau à gaz (54).

35. Sonde selon l'une des revendications 18 à 34, caractérisée par le fait que les emplacements de mesure ou l'emplacement de mesure allongé (30) sont situés entièrement à l'intérieur du tuyau à gaz (28, 54).

36. Sonde selon l'une des revendications 18 à 35, caractérisée par le fait que le tuyau à gaz (28) présente au-dessus de l'emplacement de mesure supérieur ou de l'extrémité supérieure de l'emplacement de mesure allongé (30) au moins un orifice supplémentaire (31) qui communique avec l'intérieur d'un récipient.
